# EUROPEAN PATENT APPLICATION

(11) **EP 2 306 302 A1**
(43) Date of publication of application: **06.04.2011**
(21) Application number: 10180812.9
(22) Date of filing: 04.03.2005
(51) Int. Cl.: G06F 3/147

(54) **Electronic shelf label, handheld device and method for use in an electronic shelf label system**

(30) Priority: 05.03.2004 SE 0400556
(62) Divisional of application: 05711174.2
(71) Applicant: Pricer AB, 192 79 Sollentuna (SE)
(72) Inventor: Nilsson, Björn, 74021 Järlåsa (SE); Andersson, Lars, 75231 Uppsala (SE)
(74) Representative: Norberg, Charlotte

(57) **Abstract**

The invention relates to a handheld device for communicating with an electronic shelf label comprising a control unit and at least one memory unit holding information about a product associated with said label, said label comprising receiving means for receiving from the handheld device a request for information about the product associated with the electronic shelf label, said control unit being arranged to process said request and select information stored in said at least one memory unit, and transmitter means for transmitting said information to the handheld device in response to such request. A transceiver means (56,59) communicates with an electronic shelf label to obtain price information. A calculating means (55) adds the price to a total price which is then stored in a memory means (58).

## Description

### Technical Field

The present invention relates to an electronic shelf label, a handheld device and a method for use in an electronic shelf label system in accordance with the respective preambles of independent claims 1, 5 and 7.

### Background and Prior Art

Electronic labelling systems are known in which electronic labels can be placed on shelves, for example, in grocery stores, to serve as price tags. The information displayed on the labels can be updated from a central unit communicating with the labels via infrared (IR) connections or RF communication. Such systems are often referred to as Electronic Shelf Labelling systems (ESL), but the labels do not necessarily have to be placed on shelves. Instead, the labels can hang from the ceiling or be displayed in some other way. In this document, the phrases electronic label and electronic shelf label are used interchangeably and should not be restricted to labels intended to be attached to shelves.

It is known to let each label comprise a number of registers, or pages; one of which can be displayed at any given time. The information to display can be controlled from the central unit, or from handheld devices used, for example by the staff.

In addition to price information the labels can hold other types information, such as special offers, the number of items of a particular product still in stock, the expected number of merchandise on the shelf, space management information. Normally, however, the price information is displayed.

Generally in such systems handheld devices are available which enable store personnel to communicate with a label directly at a shelf. The most common use is to select the type of information to be displayed on the label, for example, to see if more items need to be ordered. An authorization code stored in the handheld devices is transmitted to a label together with a command. The authorization code is verified by the label to authorize the execution of the command, for example displaying a certain type of information.

The authorization code may be selected by the user of the system and is provided in the handheld device during manufacturing, coded in a control unit in a memory of the handheld device. Changing the authorization code requires advanced equipment, and normally involves returning the handheld device to the manufacturer. Any change of the authorization code must be made both in the handheld unit and in the label.

### Summary of the Invention

An object is achieved according to the invention, by means of an electronic shelf label comprising a control unit and at least one memory unit holding information about a product associated with said label, said label comprising receiving means for receiving from a handheld device a request for information about the product associated with the electronic shelf label, said control unit being arranged to process said request and select information stored in said at least one memory unit, and transmitter means for transmitting said information to the handheld device in response to such request.

In accordance with a further aspect of the invention, the object is achieved by means of a handheld device and a method for use in an electronic shelf label system, the handheld device comprising transceiver means for communicating with at least one electronic shelf label, **characterized in that** transmitter means is provided for requesting information about the product associated with the electronic shelf label, in particular price information, and receiver means is provided for receiving said information from the electronic shelf label and memory means for storing said information.

In accordance with this aspect of the present invention, the information may also be storied, or part of the information, in a memory in the handheld device. It may also involve adding price data comprised in the requested information to previously received price data to provide a total sum indicating the cost for several products. The method also comprises displaying at least part of the requested information on a display of the handheld device.

### Brief Description of the Drawings

The present invention will be described in more detail in the following, with reference to the appended drawings, in which:
Figure 1 is an overall view of a prior art electronic labelling system;
Figure 2A shows a front view of an example electronic label;
Figure 2B is a logical schematic diagram of an example electronic label;
Figure 3 shows an information frame used to communicate with the electronic labels according to the invention;
Fig. 4 shows a handheld device according to an aspect of the invention;
Fig. 5 shows a handheld device according to an aspect of the invention;
Fig. 6 illustrates the principle of registers, or pages, and pointers;
Fig. 7 illustrates generally an electronic shelf label using two flash masks according to an aspect of the invention;
Fig. 8 is a more detailed picture of an electronic shelf label using two flash masks;
Fig. 9 illustrates a fundamental master-slave configuration according to an aspect of the invention;
Fig. 10 illustrates a first embodiment of the master-slave configuration;
Fig. 11 illustrates a second embodiment of the master-slave configuration;
Fig. 12 shows an electronic label using an external processor according to an aspect of the invention;
Fig. 13 illustrates the power consumption over time when an external microprocessor is used;
Fig. 14 is a schematic view of a central unit used according to one aspect of the invention;
Fig. 15 shows the layout of a dot matrix display;
Figure 16 is a simplified example of an HTML file used in one aspect of the invention.

### Detailed Description of Embodiments

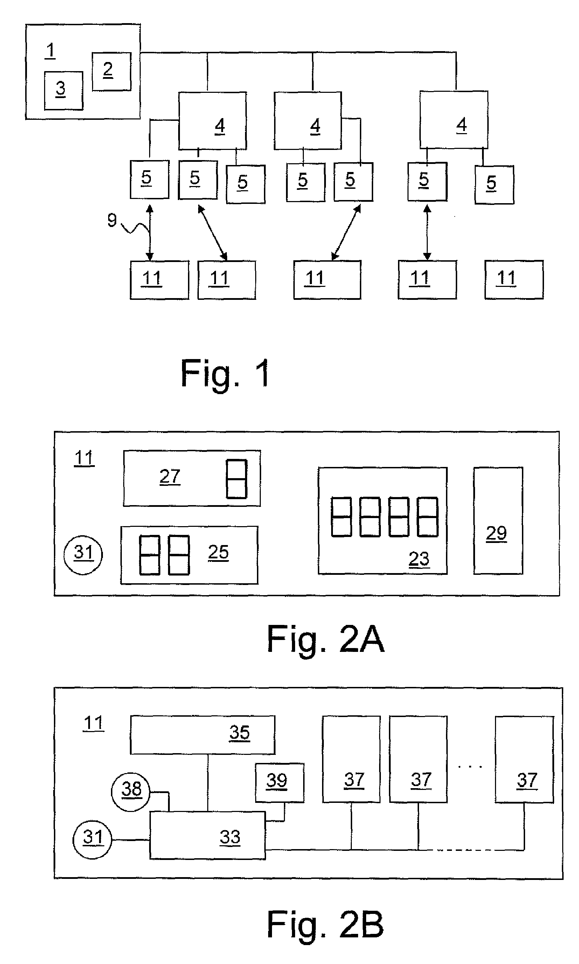

Figure 1 shows a conventional electronic labelling system, based on infrared (IR) communication. The system could also be based on any other wireless transmission methods known in the art. A central unit 1, which may be based on a personal computer (PC), comprises server software and acts like a server in the system. The central unit 1 comprises a processor 2 and a memory 3. Alternatively, the memory, or part of it, may be an external unit connected to the central unit 1. One or more base stations 4 are connected to the central unit 1, for example by Ethernet connections or by serial communication. To each base station 4 a number of transceivers 5 are connected. The base stations 4 handle modulation and frequency generation for the carrier. The modulation may be pulse position modulation. The transceivers 5 convert the electrical signals received from the base station to IR signals and transmit these IR signals through IR connections 9 to a number of electronic labels 11. The transceivers 5 also receive IR signals transmitted from the electronic labels 11 and convert them to electrical signals that can be read by the respective base station 4. The electronic labels 11 are battery-powered stand-alone price tags.

Figure 2A is a front view of one embodiment of an electronic label 11. The electronic label 11 comprises a first price field 23 for displaying the price per item of the product, a second price field 25 for displaying the price per unit, for example, per kilo of the product, a third price field 27 for displaying other information, for example, about a special offer. Each field 23, 25, 27 is comprised of a number of digits, where each digit can be written as a combination of seven segments. An indicator field 29, for example, comprising only one segment, may be used, for example, to display a red light to indicate a discount. The indicator field could also be replaced by for example a red light-emitting diode (LED) or similar eye-catcher. Of course, the fields 23, 25, 27, 29 may be arranged in a different way, and/or used for displaying other types of information as desired. Also, the display may be a dot matrix type of display.

Figure 2B is a general logical view of the electronic label 11 of Fig. 2A. Each electronic label has its own individual address. For receiving commands and information updates from the transceivers 5 in the system, or from a handheld unit, the label comprises a receiver, in this case an IR receiver 31, connected to a control unit 33 in the label. The control unit 33 receives and acts on commands and information received, in ways well known to the skilled person. The label 11 may also comprise a transmitter in addition to the receiver 31, or a transceiver unit, to enable two-way communication. The control unit 33 controls one or more displays 35 corresponding to the fields 23, 25, 27, and 29 of Figure 2A. The label 11 comprises a number of registers 37 connected to the control unit 33, each comprising a particular piece of information, typically a page of information. The control unit 33 controls the display of information comprised in the registers 37 on the display 35 or displays. The control unit 33 also controls the update of each register 37 using information received through the receiver 31. The control unit 33 can be part of an Application Specific Integrated Circuit (ASIC) including all memory and processing functions needed in the label. Alternatively, the control unit 33 can be a microprocessor, which may be relatively simple.

Optionally, the label also comprises sound generating means 38, for generating a sound to attract attention, for example because an error state has been detected in the label. This will be discussed in more detail below. The label may also comprise timing means 39 for various timing functions.

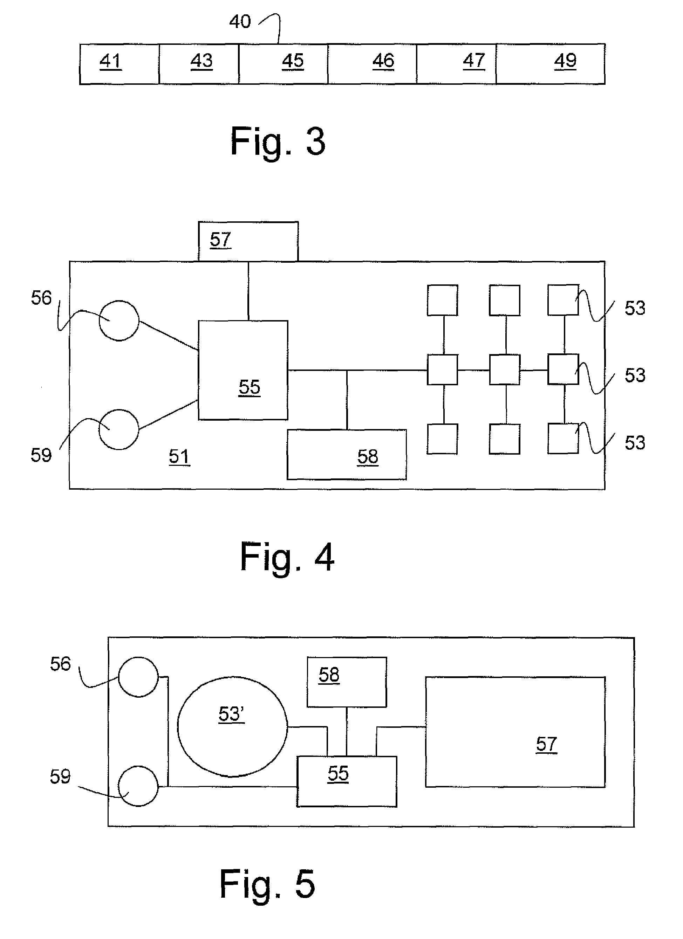

Figure 3 illustrates a frame 40 of information used in communication between the system and the electronic label and between a handheld unit and the electronic label, respectively. The first field of the frame is a protocol field 41 specifying the protocol used for communication. The same protocol is used for all labels in the system. The protocol field 41 therefore primarily serves as a "wake-up" field for each label. Next is an address field 43, comprising the address of the label for which the frame is intended. The next field is a code field 45, comprising an authorization code, which may be either an access code or a key code. The access code is required for certain commands, for example to update information. For other commands, for example to view certain information, the key code is sufficient. Other commands may not require a code at all. The command is comprised in a command field 46. Next, a data field 47 comprises data, for example, updates for one or more registers 37 of the label. The last field is a checksum field 49. Of course, other fields may be included in the frame, or the order of the fields may be changed.

Broadcast commands can be used, that is, commands intended for more than one label. In this case, the content of the address field will not be checked.

Such a handheld device is disclosed in US patent 6,105,004.

Figure 4 shows a handheld device 51 for use when communicating with a particular label. The handheld device 51 can also be used for simultaneous communication with a number of labels located near each other, depending on the distance from the handheld device to the labels.

The handheld device comprises a number of pushbuttons 53, each representing a page, or register in the memory of the labels. This may be implemented, for example by designing the control unit as an ASIC in which some of the ASIC's control outputs for the display segments are instead used as digital inputs. The skilled person is familiar with how to reconfigure the inputs and outputs of an ASIC. For example, to control 32 buttons 53, 12 display outputs can be used. Four outputs are used as outputs for a waveform and the remaining eight are converted to inputs. By interpreting the combinations of four waveforms on eight different inputs, a total of 32 different combinations are achieved, which may be used to address 32 different registers. How to implement this is well known to the skilled person. When a button is pushed, a logic control unit 55 in the handheld device receives a signal from this button, decodes the signal and determines on the basis of this what action to take. The action to be taken is usually to send a command to the label to display the information on the desired page. To this end, the control unit 55 is connected to a transmitter, in this case an IR transmitter 56. The command comprises the authorization code corresponding to this page. The authorization code in this embodiment is a 16-bit word. The control circuit can also control a display 57, if present.

The control unit 55 comprises storage means 58, which may hold information such as authorization codes. Separate storage means can be used if more memory is required. If the authorization code does not match the authorization code held in the label, the desired page will not be displayed.

According to the invention, the handheld device 51 also comprises a receiver, in this case an IR receiver 59. The IR receiver 59 is intended for communication with the transceivers 5 of the system. In this way, when a particular authorization code is to be changed, the authorization code can be transmitted through the transceivers 5 and received in the labels and in the handheld devices 51. If, as in this example, IR communication is used, this requires that each handheld device be placed within communication distance of at least one transceiver for updates. This can be achieved by defining one area, or room, in the store, in which the updates are to take place.

Preferably, the receiver 59 is of the same kind as the receivers used in the labels. Since the authorization code is changed from the same source in both the handheld device and the labels, the risk of errors is reduced. Preferably, the control unit 55 and the label control unit 33 are identical circuits and the only differences lie in the external components and the set-up of the device.

As explained above, the electronic labels can comprise several registers, or pages, each page comprising a different type of information. A particular authorization code can give access to one or more of these registers. In this way, different authorization codes can be given, for example, to different categories of staff, to customers who are members of the shop's bonus system and to other customers. For example, there may be special offers for members, that should not be displayed to other customers.

A master authorization code can be set in the system to provide access to all the registers, or pages. If the authorization code received in the label does not match the authorization code for the desired page but matches the master authorization code, the command to show the page will be executed. The master key function can be disabled by setting a system parameter to this effect.

The handheld device can be arranged to transmit its identity to the system through a wireless connection to the transceivers at regular intervals for identification.

The handheld device can also be arranged to send other types of information to the label, for example, to update information stored in the label, or to shut down the label.

It is possible to update information in the label from the handheld device, but it is probably not desirable, since in this case the system will not know what is stored in the labels. In special cases it may be useful for making quick updates, for example if a label is blocked from communication with the system for a period of time.

As mentioned above, the handheld device could also comprise a display 57, which may be used for providing information directly to a particular customer, or employee, for example about general discounts on a particular type of merchandise. This could be easily implemented by the skilled person if the handheld device, as is preferred, comprises the same type of control circuit as the labels. The information can be sent as a broadcast command and can be made dependent on where in the store the handheld device is located, by transmitting different types of information by different transceivers 5 in the system. The information can also be made dependent on the identity of the handheld device, in a similar way as discussed above, by letting the handheld device communicate its identity to the system. The system, in return, will transmit information specially adapted to the user of the particular handheld device.

Figure 5 illustrates a handheld device having essentially the same units as in Figure 4, and including a display 57 for displaying information. In Figure 5 a simplified handheld device having only one button 53' is shown.

Also, of course a handheld device having only one button can be made without a display.

The handheld device can also be equipped with a beeper that can be activated when a new message has been sent to the handheld device, to attract attention.

The messages can be transmitted to the handheld devices during daytime when the customer is in the store, or alternatively at night. The messages can be displayed one at a time, or several messages can be downloaded as several pages in the memory of the handheld device and the messages can be scrolled either automatically or by pressing a button on the handheld device.

With the method and electronic shelf label according to another aspect of the invention, a simplified handheld device like the one shown in Figure 5 can be used to display different pieces of information in a desired sequence, adapted for the user of the particular handheld device, and dependent on the specific label. Thereby simple and inexpensive handheld devices can be provided, for example, to customers. In the simplest case, each handheld device only needs to have one button, sending one command that will trigger different actions in different labels dependent on the information stored in the respective register of each label. Thus, a method and an apparatus are provided for displaying user-adapted information without the need for a full-scale handheld device.

A more complex device like the one shown in Figure 4, which is able to transmit more than one command can also be used according to the invention. Of course, the device may or may not comprise a receiver, for receiving information from the electronic shelf label system.

According to this aspect of the invention, each electronic shelf label can be preset with an arbitrary command. Commands could be downloaded to a register of the label by the system or when manufacturing the label. All commands handled by the label can be downloaded in this manner, for example commands to change the base mode operation of the label, to update a data register in the label or to start a temporary mode, such as a temporary scroll sequence, or just to show one temporary image for a period of time. One preferred such command is a scroll command to initiate a scroll sequence. The execution of the command can be triggered by a command from the handheld device, by pressing a button on the label itself, or by a command from the central unit of the system.

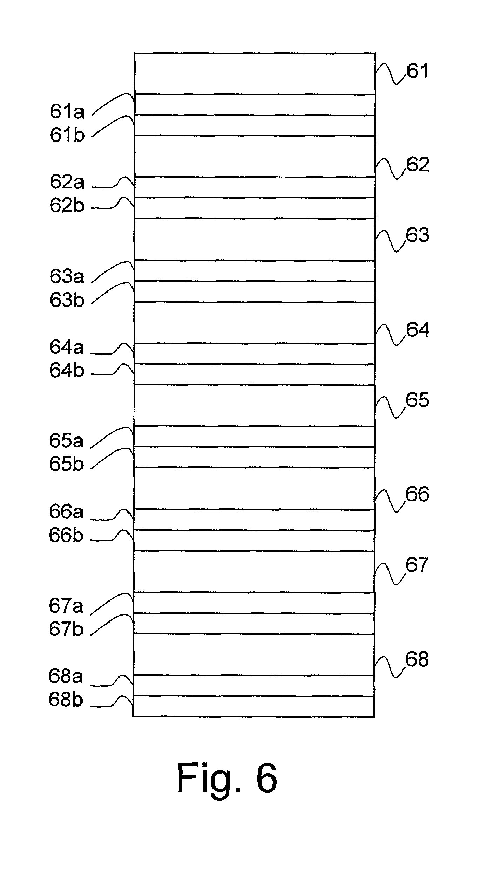

Figure 6 illustrates logically an embodiment enabling the implementation of several different scroll sequences. As explained above, the electronic shelf label comprises a number of registers, in this case eight registers 61 - 68. Each register 61-68 is associated with a first and a second pointer 61a, 61b, 62a, 62b,..., 68a,68b. According to this embodiment each register 61-68 can be used in two different scroll sequences. In one scroll sequence, only the first or the second pointer of each label can be used. To implement a scroll sequence involving pages 62, 65, 64 and 68, in that order, as shown in Figure 4, the first pointer 62a associated with page 62 is set to point at page 65. The first pointer 65a of page 65 is set to point at page 64. The first pointer 64a of page 64 is set to point at page 68. At the same time, an alternative scroll sequence may be defined involving 61, 63, 66 and 67, in an arbitrary order, can be implemented using the first pointer of each respective page. If, for example, page 65 is to be used in another scroll sequence as well, this scroll sequence must use the second pointer 61b,...,68b of each page 61,...68 that is involved.

Preferably, the each pointer 61a, 61b,..., 68a, 68b also comprises information about the length of the period in which the information of the page associated with the pointer should be displayed before going to the page pointed to by the pointer.

The scroll sequence can, for example, be as follows:
Display register 63 for 10 seconds
Display register 66 for 5 seconds
Return to default page (for example, page 61)

In this case, the command points to the register 63. The relevant pointer, say pointer 63a specifies 10 seconds waiting time and points at page 66. Pointer 66a specifies 5 seconds waiting time and indicates end of scroll sequence, or points at the default page. Alternatively the pointer may specify the display time for the next page, that is, the page to which the pointer points.

Also preferably, the command transmitted from the handheld device to the label comprises the starting page and the scroll sequence to be followed, that is, if pointer a or b should be used. Alternatively, the scroll command could be preloaded in the relevant register and the command transmitted from the handheld device to the label simply a command to trigger the execution of the preloaded command.

The scroll sequence could also scroll through all registers one by one.

The selection of actions to be taken in response to the command can be made during the linking process, when the electronic shelf label is connected in a database to the product item, or it can be preloaded during manufacturing. Alternatively it can be changed at any time by a command from the electronic shelf label system.

Preferably, the scrolling sequence can be controlled to some extent from the handheld device. For example, while scrolling, the display of a particular page can be prolonged by continuously pressing the same button that initiated the scrolling again, or by pressing another button, depending on how the function is implemented. While scrolling, it may be possible to step faster through display pages that are not of interest, for example by briefly pressing the same button again. This applies regardless of whether the scrolling function was started from the label itself or from a handheld device.

It would also be possible to initiate the scroll from the electronic shelf label system itself, by a broadcast command to all labels, or to a defined group of labels, or to a single label.

Different scroll sequences may be defined for different user groups. For example, different offers may be given to different customer categories. Alternatively information about the number of points, or calories, may be provided, for example, to members of a health or dieting organization. People who are allergic to certain types of food may be given specific information on whether or not the product contains anything that may be dangerous. In this case, each user group must have a specific key arranged to issue a specific command to initiate the scroll sequence that applies to this user group.

The scroll can also be implemented in order to make an image, for example, a dotted line, move in one direction, to indicate in what direction the merchandise is found. The image that is to move can then be stored in each of the registers involved in a scroll sequence, the position of the image being shifted in the desired direction from one image to the next.

This could be achieved in several different ways: If the electronic label receives one page of information it could automatically store same data in several registers. The segments that are to be active in the scroll need to be defined separately from the rest of the image. The control means is arranged to define the segments to be changed and store information on how to change them in the copied registers. When scrolling these images one after another the only thing moving is the dotted line. The advantage with this solution is that the data that shall not flash only needs to be transmitted once.

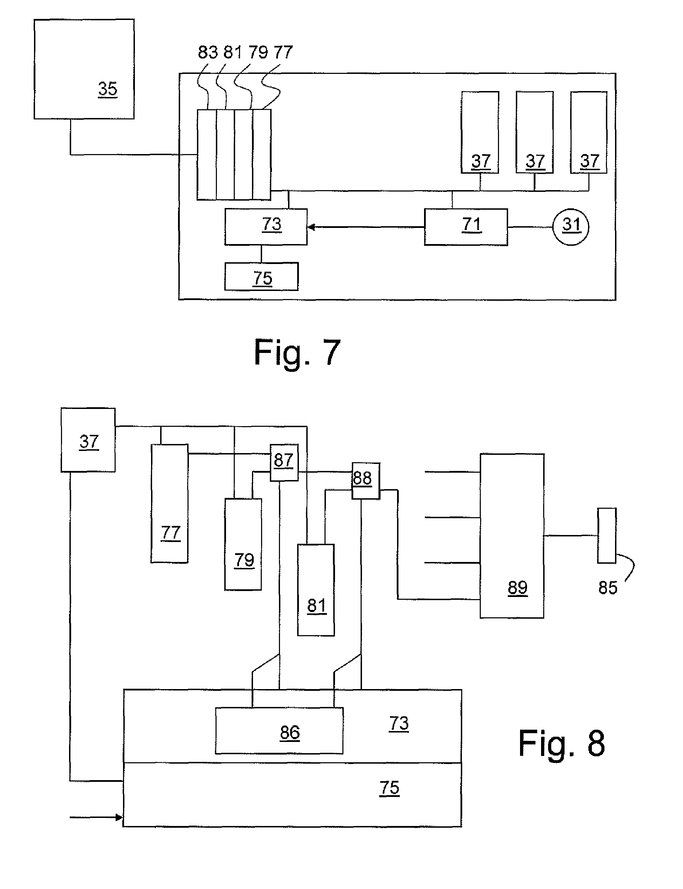

A more advanced embodiment of an electronic label could have means to change only the segments defined to be scrolling segments, using, for example, a scroll mask in order to reduce the need of copying the same information to several registers. This could be implemented using essentially the same circuitry and three registers as described in Figure 8. The first register 77 is the full image data. The next register 79 is a scroll mask working in a similar manner as the flash mask to enable only scroll segments in the register 77 to be altered and the third register 81 would be a register to be updated during the part-image scroll mode. The only data of interest in these registers are the data for the scroll-enabled segments, the other data bits are not used (dummy bits). When updating the price the only register that would have to be updated would be the one in the first register 77.

No automatic copy of data to several registers will be required for this method. If desired further memory space could be saved by adding a function that will download only the segments that are to scroll and not the dummy bits and store them all in one register. One register could then keep information about how, for example, eight segments are to change over time, in blocks of eight bits. Information could be provided in the register about the number of segments, that is, the number of bits in each block, or a fixed size for the blocks could be defined.

Another way to create a moving pattern would be as described below. The scroll mask can be used to define the segments of an image that shall be moving, all other segments are not affected by the moving segment scroll. The order of the moving segments needs to defined in an additional memory. A simple way of defining the scroll order is to define the scroll mask using for example 3 pages of memory where non changed segments is set to 000 (page 1 bit 0, page 2 bit 0, page 3 bit 0) and the moving segments to 001,010, 011, 100, 101, 110, 111 defining 7 segments and the order for the segments to be lit up during the moving line activation time. 4 pages will control 15 segments in the dotted line and 5 pages 31 segments or if only 3 segments are needed a 2-page scroll mask is sufficient.

Another way to create a simple moving image would be to use a flash function as described below, using one or more flash masks.

The scroll mask can also be used to define the part of the display to be updated during scroll. Partial update of the display is of major interest for a bistable display that is to be used for scrolling. A complete update usually involves a high energy consumption, but the partial update can be used in some cases to implement scroll of a few segments. Complete updates can be made more seldom, thus enabling a low average current consumption in the label.

The scroll sequence should be limited to a certain duration, or a number of sequences. After this time, or number of sequences, the label should go back to showing the same information as before the scroll begun.

According to the invention a base mode is defined, which is the default mode of the circuit. The base mode may involve displaying a particular page, scrolling between a number of pages or not showing any information. The circuit will not need a command or any other information to enter this state. Temporary modes are defined as the modes that the circuit enters for a limited period of time, for example, to display a particular page, to scroll or snooze. After a temporary mode the circuit will always return to the base mode. The display control function loads the display register with the page data that are required, after a temporary mode has expired or the display memory has been updated.

A specific command is defined to change the base mode. Preferably the base mode can be changed while the circuit is in temporary mode, and enter the new base mode when the temporary mode ends. The base mode can also be changed while the circuit is in base mode.

In this embodiment, if the circuit is already in a temporary mode when it receives a new temporary command the circuit will terminate the running command and execute the new, except for snooze commands, which only override other snooze commands. For example, a long snooze command can be terminated by a short snooze command.

A special case of the scroll command is the show command, which initiates the display of one particular register, or page, for a predefined amount of time.

In this aspect, the invention involves an electronic label 11 for use with an electronic label system, said label comprising a number of registers 37 for holding different pieces of information that can be displayed on a display 35 of the shelf label 11 and comprising control means 33 for controlling the display of information on the label, **characterized in that** at least a first one of the registers 37 is able to hold a command that will initiate the execution of a predefined command comprised in the first register.

In a preferred embodiment the predefined command is a predefined scroll sequence displaying at least a second register.

Preferably, the control means of the electronic shelf label is arranged to start the scroll sequence in response to a command received on a wireless connection from a handheld device to access said first register.

The control means of the electronic shelf label can also be arranged to start the scroll sequence in response to a button on the label itself being pressed.

The control means is preferably arranged to verify an authorization code received with the command and initiate the scroll sequence only if the authorization code matches a stored authorization code.

Preferably each register 37 is associated with at least a first pointer that can be set to point to another register that should be displayed after the register associated with the pointer.

Each register can also be associated with a second pointer that can be set to point to another register that should be displayed after the register associated with the pointer. Information in the command transmitted from the handheld device must then indicate which pointer should be followed.

Preferably the at least first pointer also comprises information about how long the page associated with the pointer is to be displayed. Alternatively the at least first pointer comprises information about how long the page to which the pointer points should be displayed. These features enable different pages to be displayed for different amounts of time.

The control means is preferably arranged to process update information received from the central unit or from a handheld device and store at least part of the information in more than one of the registers.

The invention also comprises a method for use in an electronic shelf label system comprising a plurality of labels 11, each label comprising a number of registers 37 for holding different pieces of information that can be displayed on the shelf label and comprising control means 33 for controlling the display of information on the label, characterized by the steps of receiving in the control means a command to initiate a predefined command stored in one of the registers 37 upon receiving a command from the handheld device, said command including a reference to the register 37 concerned.

In a preferred embodiment the predefined command includes displaying a scroll sequence displaying at least a second register, initiating the scroll sequence in response to the command. The command can also be triggered by a command received from the central unit of the system, or by pressing a button on the label itself.

This aspect of the invention also involves handheld device for use in an electronic labelling system comprising a plurality of electronic labels, said handheld device comprising a transmitter for transmitting a command to the at least one label and control means for controlling the function of the handheld device, **characterized in that** it is adapted to transmit to the at least one label a command including a reference to a first register in said label and an indication that a scroll sequence should be initiated in the label starting at that register.

The handheld device is preferably arranged to transmit a command including identification of one of at least two pointers associated with said register, as the pointer to be followed in the scroll sequence.

The invention according to this aspect also involves an electronic labelling system comprising at least one electronic label according to the above and/or a handheld device according to the above.

According to the invention, the electronic label also comprises information about a flash mask. The flash mask comprises no data to be displayed, but only information about the regions, or segments, on the display that are to flash.

Two or more flash masks can be combined, for example to let some segments, or segment groups, 23, 25, 27, 29 flash with a first frequency and other segments with another frequency. For example, the segments used to indicate price of an item can flash with a first frequency and any special offer (such as three for the price of two) can flash at a second frequency.

Figure 7 is a logical view of an embodiment of a label comprising flash masks according to the invention. The as common in the art, label comprises a receiver 31 and possibly a transmitter (not shown), or a transceiver, connected to a command decoding block 71. The command decoding block 71 receives commands from the system, through receiver 31 and determines the action to be taken. The command decoding block 71 is also connected to an display control unit 73, which in turn receives a clock signal from a clock generating means 75. As is common in the art, the label comprises a display 35 which receives information from a display register 77, which in turn receives information to be displayed from one or more registers 37. The reading from the registers 37 to the display register 77 is controlled by the command decoding block 71. The display of the information in the display register 77 on the display 35 is controlled by the display control unit 73 in dependence of the clock signal from the clock generating means 75. The clock signal is used to control a flash timing counter in the display control unit 73. To determine the start of a flash cycle, the flash timing counter can also be reset from the system. To make a number of labels flash at the same time, a command to reset the flash timing counter is sent to all those labels at the same time.

The label may also comprise one or more flash masks 79, 81 and an display driver unit 83. The function of the flash masks is described in more detail below.

Figure 8 shows in more detail an embodiment for controlling one segment of the display. As discussed in connection with Figure 7, a display register receives information that is to be displayed on the display from at least one register 37. Here, only one segment 85 of the display is shown. The display controller 73 in this case receives a clock signal from a clock generator 75 and uses said clock signal to control the function of one or more logical circuits (AND circuits) used to alter the displayed information. Preferably, the display controller 73 comprises a flash timer 86 which receives the clock signal from a clock generator 75 and control the AND circuit in dependence of this clock signal.

The output from the display register 77 to the segment 85 is either 1 or 0, that is, either on or off. This output is fed to a first AND circuit 87, which also receives from the first flash mask 79 information about whether or not the segment 85 should be on or off. If the segment is to flash, the AND circuit 87 will receive from the first flash mask 79 alternatingly 0 and 1. Only if the signal received from the display register 77 and the signal received from the flash mask 79 are both 1 will the output from the first AND circuit 87 be 1. If a segment is not supposed to flash, the flash mask will always provide a high signal to the AND circuit. A high signal from the display register will then result in the segment always being on. If the signal from the display register is low, the segment will be off.

In the embodiment shown in Figure 8, a second flash mask 81 and a second AND circuit 88 is also used. The second AND circuit 88 receives as input the output from the first AND circuit 87 and information from the second flash mask 81 about whether or not the segment 85 should be on or off. If both input signals are 1 the segment 85 will be on. If one or both input signals are 0 the segment 85 will be off. The output from the second AND circuit 88 is fed to one input of a control unit 89, which may be a simple segment driver or, as indicated in Figure 5, a multiplexing unit creating multiplex drive scheme signals.

If the signal from the display register 77 is 0, the segment will always be off, regardless of the content of the flash masks 79, 81.

The flash masks 79, 81 may be used to achieve different frequencies of flashing of the same segments, or different flash masks may be applied to different segments.

The clock signal generated by the clock generator 75 is a square pulse. In order to synchronize the flashing of several labels, a reset command is transmitted as a broadcast signal from the central unit 1 of the system. This reset command is received in the control unit of each label and used to reset the clock generator means 75 so that the pulse cycle will start again at a predefined point of the cycle, for example the upward edge of the pulse, in order to make sure that the cycles of all labels are at the same point at the same time. The flash timer 86 is also reset by this command. The flash function of the labels will then be synchronized, provided that the frequencies used are the same.

The synchronization functions can also be used to create a pattern, for example a wave of flashing labels, by synchronizing each label with a slight delay corresponding to its position on the shelf edge. Instead of resetting the timers of all labels at exactly the same time, a delay function may be used, for example to create the impression of a wave or an arrow (or other figure) moving along a shelf.

The flash mask can also be used to define the part of the display to be updated during scroll. Partial update of the display is of major interest for a bistable display that is to be used for scrolling. A complete update usually involves a high energy consumption, but the partial update can be used in some cases to implement scroll of a few segments. Complete updates can be made more seldom, thus enabling a low average current consumption in the label.

Optionally, it may be selected when defining the scroll if the lit segments shall still be on when the next segment is lit and turned on only at the beginning of the next scroll sequence, or only on of the segments should be on at any given time. This could be done with only one bit in the scroll set-up.

Using the flash mask according to the invention only one frame needs to be transmitted to update the data that is to be displayed, if the same segments that were flashing before are still to flash. Also, since only one page is used, there is no need to toggle between two pages to achieve the flash, so that battery capacity is saved according to this invention.

Several pages can use the same flash mask.

According to the invention display time (the time the whole page is displayed) and the off-time can be specified separately from each other.

Two or more flash masks can be used together, with different parameter settings regarding ontime and offtime.

The synchronization function may also be used to synchronize the scrolling of pages between several labels. In this case the timer 86 is used as a scroll timer. Upon a command from the central unit the timer 86 is reset and the scroll sequence starts again at a predefined point of the scroll sequence. The flash and scroll functions can also be combined.

In this aspect the invention involves:
An electronic shelf label 11 for use in an electronic shelf label system and comprising a display 35 for displaying information comprising a number of segments 85 for creating characters, communication means 31 for communicating with a central unit of the electronic shelf label system, a display control means 83, 89, a control circuit 73 for controlling the display 35, communication means 31 and the display control means 83, 89, said label being **characterized in that** it comprises flash means 79, 81, 87, 88 for selecting a first group of segments in which each segment should be either on or off all the time, and a second group of segments in which at least some segments are turned on and off with a regular frequency.

The flash means preferably includes a first flash mask 79 controlled by the control circuit 73 in dependence of a first clock cycle provided by a clock generating means 75 to produce a control signal for at least one segment in the second group alternating between a high and a low signal, and a first logical circuit 87 arranged to receive a first input signal from the display register 77 and a second input signal from the first flash mask 79 and output an output signal in dependence of said first and second input signal.

The flash means can also include a second flash mask 81 controlled by the control circuit 73 in dependence of a second clock cycle provided by the clock generating means 75 to produce a control signal for at least one segment in the second group alternating between a high and a low signal, and a second logical circuit 88 arranged to receive a third input signal from the first logical circuit 87 and a fourth input signal from the second flash mask 81 and output an output signal in dependence of said third and fourth input signal.

According to this aspect, the invention also involves an electronic shelf label for use in an electronic label system and comprising a display 35 for displaying information comprising a number of segments 85 for creating characters, communication means 31 for communicating with a central unit 1 a control circuit 73 for controlling the display 35 and the communication means 31, **characterized in that** it comprises a clock generating means 75 arranged to provide a clock signal to the control unit 73 and that the control unit 73 comprises a timing counter for controlling at least some segments on the display of the label in dependence of the clock signal.

Preferably the timing counter 86 and the clock generating means 75 can be reset by the control unit 73 upon reception of a reset command from the central unit 1.

The control unit may be arranged to reset the timing counter 86 and the clock generating means 75 immediately upon receiving the timing information or with a delay. Different delays can be used in different labels, to create an image of a wave, or other moving image.

The invention according to this aspect also involves a method of controlling the display of an electronic label in an electronic labelling system, characterized by the steps of
- controlling at least one segment of the display by means of a control unit 73 in dependence of a clock signal
- transmitting from a central unit in the electronic labelling system a reset command to reset the clock signal
- receiving said reset command in the control unit
- resetting the clock signal in dependence of the reset command.

The command may include a delay function to delay the reset.

The method may be used to reset a scroll function in at least one label controlled by a control circuit 73 in dependence of timing information received from the clock generating means 75. This may be used, for example, in order to synchronize scrolling between two or more labels.

The method can also be used to reset a flash function in at least one label controlled by the control circuit 73 in dependence of timing information received from the clock generating means. This may be used, for example, in order to synchronize flashing between two or more labels.

There is a risk of failure or malfunction of the electronic shelf labels. For example, the battery has a limited lifetime. Also, especially if IR communication is used, there is a risk that something will block the communication, thus preventing signals from the central unit from reaching the label for which it is intended.

To monitor the battery level by interrogating the electronic shelf label has been known for a long time. Applicant has installed such functions since 1996. European patent application EP 1 107 154 discloses an electronic shelf label system wherein the labels are provided with a self-test program. The self-test program can be executed upon a command from the central unit or automatically by the label itself. For self-diagnosis the control unit of the label sends out a test signal to a number of units comprised in the label and receives and evaluates a return signal from each component. Failure may be reported to the central unit, or indicated by the label itself, for example on a display or by means of an audible signal. In order to ensure that failure is detected even if the label is unable to signal to the central unit, a signal indicating normal operation may be transmitted to the central unit at regular intervals.

For an ESL system to function satisfactorily, communication between the central unit 1 and each label 11 must function at any given time, to ensure that update information intended for a particular label reaches that label. Wireless communication links sometimes fail, causing interruptions in the communication. In particular in systems using IR communication, the communication between a transceiver 5 and one or more labels 11 may be blocked by physical obstacles, for example, a stack of goods placed so that it blocks the communication between the transceiver 5 and the label 11. Of course, the communication between the central unit 1 and the transceiver 5, which is usually wired, can also fail.

Communication interrupts are particularly serious in one-way systems, that is, systems in which the labels do not comprise transmitters, since, in this case, the central unit has no way of detecting that a particular label is unable to receive update information.

This problem can be overcome by adapting each label to monitor the time that passes between two updates from the system. A threshold time is set, corresponding to the maximum time that should be allowed to lapse between two messages from the central unit. A timer 39 is used to measure the time from the latest message received. The control unit 33 receives the signal from the timer 39 and compares it to the threshold time. If the time passed exceeds the threshold time, the control unit 33 takes appropriate action. A typical maximum time period would be 24 hours, but it could be shorter, for example, 10 minutes or longer as desired.

The time measured in each label may be the time between two messages intended especially for the particular label, or the time between any two messages received by the label. The messages intended especially for the particular label may include broadcast messages intended for all labels, or a group of labels.

The action may be to change the display to a preloaded image in one of the registers of the label, for example, giving an error message. Alternatively, one segment of the display can be controlled in a predetermined way, to be turned on, or off, or to blink in a particular way. Alternatively, if the label comprises an audio unit 38, an alarm sound might be issued.

The central unit, in this case, should be adapted to ensure that it transmits a message to each of the labels more often than the maximum time that has been set, to that only labels that are really unable to receive messages from the central unit are considered faulty.

By monitoring the time between messages received in each label it is ensured that labels do not display faulty information, except for a limited period of time, which cannot be longer than the maximum time set according to the above.

In this aspect the invention involves: an electronic label 11 comprising a display for displaying information related to a product, a receiving means 31 for receiving commands and/or data from a central unit 1, a control unit 33 for controlling the display and the receiving means, said label being **characterized in that** it comprises
- a timer 39 for measuring the time passed since the last message was received from the central unit,
- comparing means 39 for comparing the measured time to a predetermined threshold time, and
- control means 33 for initiating a predetermined action if the measured time exceeds the threshold time.

The action can involve controlling at least part of the display 35, for example one or more segments, in a predetermined way.

If the label comprises sound generating means 38 the action can involve issuing an alarm sound to call attention to the label.

The timer 39 may be arranged to measure the time passed since the last message intended for the label was received in the label, or the time passed since the last message intended for any label was received in the label.

The invention in this aspect also involves an electronic labelling system including such a label.

Each label comprises communication means including at least a receiver and possibly a transmitter, connected to a control unit which drives the display, and each label has its own address. Only a limited amount of information can be shown on one individual label, and each label has to be updated individually. In a prior art electronic shelf label the control unit is typically able to control 184 segments, which may be used, for example, to form 26 characters and two additional segments.

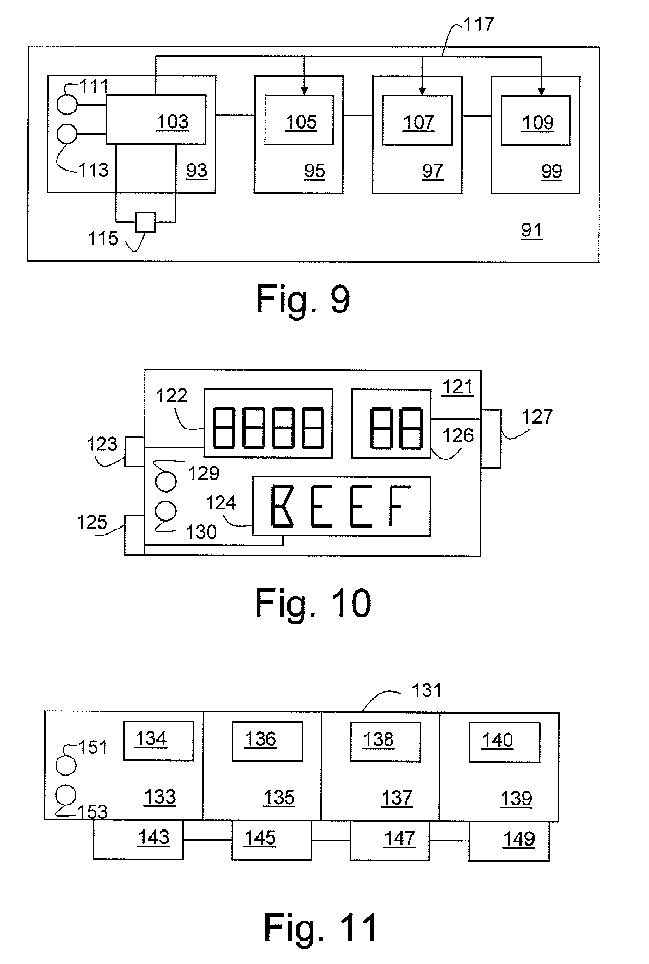

Figure 9 shows a basic configuration of an electronic shelf label 91 according to the invention. Basically, the label is assembled of a number of labels 93, 95, 97, 99, for example, four, each having its own control circuit 103, 105, 107, 109, respectively. The control circuits of the labels are serially connected. The first label in the series acts as a master in a master - slave configuration. The other labels are treated as slaves.

With this configuration, several labels can be used together to display more information than can be displayed on one single label.

If each control circuit 103, 105,107, 109 can handle up to 184 segments, this means that the electronic shelf label shown here can handle 736 segments. Each control circuit, or label, has its own address, but the addresses of the slave circuits 105, 107, 109 are related to the address of the master in a well-defined way. The simplest solution would be to increment the addresses, for example, if the master address is 16, the slaves' addresses would be 17, 18 and 19.

Preferably, as shown in this embodiment, only the master label 93 comprises receiving means 111 and transmitting means 113 for communicating with the system. The master control circuit 103 is arranged to receive and act upon information for all control circuits in the assembly, instead of just information intended for the master control circuit itself. Information intended for the slave control circuits 105, 107, 109 in the assembly is forwarded to all the slave control circuits 105, 107, 109. The control circuit for which the information was intended then acts upon it. The information may be, for example, update information for the segments controlled by this control circuit. An alternative configuration would be to connect each slave circuit 105, 107, 109 directly to the master circuit 103. The master circuit 103 could then determine which slave circuit 105, 107, 109 was to receive a particular piece of information and transmit it only to this particular slave circuit. If a segment-based display is used, each slave circuit is a segment driver.

The master control circuit 103 also receives a clock signal from a clock generator 115 and transmits this clock signal 117 to all the slave circuits 105, 107, 109 to ensure synchronization between the master and slave circuits.

A first way of applying the master - slave configuration of the invention is shown in Figure 10. Here, the labels are integrated to form one large label 121. A first group 122 of segments on the label is controlled by a first control circuit 123, which is the master control circuit. Second 124 and third 126 groups of segments are controlled by a first 125 and a second 127 slave control circuit, respectively. The control circuits 123, 125, 127 between them can handle 552 segments, which is the total number of segments that can be used in the embodiment shown in Figure 5. The label 121 also comprises receiving and transmitting means 129, 130, controlled by the master circuit 123, for communicating with the system in the conventional way. As in the general embodiment, the slave circuits' addresses are preferably dependent on the master circuit's address. The address of each label, or circuit, is used when determining for which label information coming from the system is intended.

A second way of applying the master-slave configuration is shown in Figure 11, which illustrates an assembly 131 of labels (four in this example) working together. Here, the general layout of each label 133, 135, 137, 139 is essentially as when the labels are used separately. Each label comprises a display 134, 136, 138, 140, respectively. The labels are connected, either adjacent each other or at a distance from each other. Each label comprises a control circuit 143, 145, 147, 149, one control circuit 143 being the master circuit. The label 133 controlled by this circuit 143 is the master label. The master label 133 also comprises receiving and transmitting means 151, 153 for communicating with the system in the conventional way.

If the labels are connected at a distance from each other, the label assembly can be used along an entire shelf, or a part of a shelf. In this case, the labels can be integrated in a rail, or strip, or placed individually and just connected through a cable. Wireless communication between the control units of the master and slave circuits is also possible.

Preferably, the same control unit can be configured to function either as a master or a slave.

In this aspect, the invention involves an electronic shelf label 91, 121, 131 for use in an electronic labelling system for providing information, for example, about the price of a product in a shop, said electronic shelf label being arranged to display said information in the form of characters, and comprising communication means 111, 113; 129, 130; 151, 153 for communicating with a central unit of the electronic labelling system, preferably through a wireless connection, said communication means 111, 113; 129, 130; 151, 153 being connected to a first control circuit 103; 123; 143 for the label, said electronic shelf label being **characterized in that** the first control circuit 103, 123; 143 is connected to at least a second control circuit 105, 107, 109; 125, 127; 145, 147, 149 connected to the first control circuit 103; 123; 143 in a master - slave configuration.

In this aspect, the invention also involves an electronic shelf label 121 for use in an electronic labelling system for providing information, for example, about the price of a product in a shop, said electronic shelf label being arranged to display said information in the form of characters, and comprising communication means 129, 130 for communicating with a central unit of the electronic labelling system, preferably through a wireless connection, said communication means being connected to a first control circuit 123 for the label,
Said electronic shelf label being **characterized in that** it comprises at least a second control circuit 125, 127 connected to the first control circuit 123 in a master - slave configuration, and that the display is divided into areas 122, 124, 126, wherein each control circuit 123, 125, 127 is arranged to control one such area 122, 124, 126.

In a first embodiment the display is segment based. In this case the segments of the display are divided into segment groups 122, 124, 126, corresponding to the above mentioned areas, wherein each control circuit 123, 125, 127 is arranged to control one such segment group 122, 124, 126. Several control units, one master and one or more slaves are used to control one label in this case.

The invention according to this aspect also involves a label assembly 131 for use in an electronic labelling system including a first 133 and at least a second electronic shelf label 135, 137, 139 for providing information, for example, about the price of a product in a store, said electronic shelf labels 133, 135, 137, 139 being arranged to display said information in the form of characters, and said first electronic shelf label comprising communication means 151, 153 for communicating with a central unit in the labelling system, preferably through a wireless connection, said communication means 151, 153 being connected to a first control circuit 143 for the first electronic shelf label, said at least second electronic shelf label 135, 137, 139 comprising a second control circuit 145, 147, 149 for controlling the function of the second electronic shelf label 145, 147, 149 and connected to the first control circuit 143 in a master - slave configuration.

In a second embodiment each of the second, or slave, control circuits 145, 147, 149 is used to control a separate label. In this way, the central unit of the system can communicate more efficiently with more than one label, and the function of several labels can be co-ordinated.

In this way, the function of two or more labels can be co-ordinated, to display more information about a single product or two or more products, typically placed next to each other on the same shelf in the shop.

In all embodiments, the address of the at least second control circuit is preferably dependent on the address of the first control circuit.

Traditionally, the information displayed on electronic shelf labels is comprised of digits, each digit being formed by a combination of seven segments. In US application No. 2002/0020935 an electronic price label system is described where a dot matrix display is used in the price label. When a dot matrix display is used instead of a segment based display better resolution in the displayed image is achieved. This enables the display of random information, and more information than can be displayed on the traditional type of label. However, controlling the dot matrix requires more processing capacity and more memory than what is needed for the traditional type of label.

A problem with a wireless price label system using dot matrix displays is that the updating of the displays takes long time and a lot of power is required leading to a short lifetime. Price labels with low power consumption are preferred, i.a. because changing the batteries of each label is a time-consuming task.

Preferably, the display is bistable, which means that it does not consume any power while the displayed information is kept unchanged, except for refreshing the image, which may have to be done at regular intervals, for example every day, or every month. Such bistable displays generally have a high energy consumption during a short update time. Often a voltage converter is required to boost the voltage provided by a battery by a factor 10 or more. For example a 3V battery may have to be up-converted to 30V to be able to update the display. The circuitry that must be active when updating a bistable display is high current consuming and should be running as little as possible, in order to save energy.

WO 03/073261 discloses an electronic price label system having a dot matrix display. To save power when updating the image only the parts of the dot matrix image that actually change are received in the electronic. This minimizes the power needed for each actual update.

It is an object of a further aspect of the present invention to enable the control of electronic shelf labels, especially having dot matrix displays, without reducing battery lifetime or increasing the cost of the labels unduly.

The invention achieves this object recognizing the fact that the most power-consuming component of the electronic shelf label is the microprocessor and by minimizing the time when the microprocessor is active.

In one embodiment of the invention the microprocessor is needed to control a dot matrix display. In another embodiment the microprocessor might be needed to control a segment-based display of an advanced type. An advanced segment-based display can, for example, be an E-paper based bistable display requiring a special type of display control functions, and in some cases a DC/DC converter control and/or temperature compensation. In one embodiment the display driver requires high-voltage power input from a DC/DC converter.

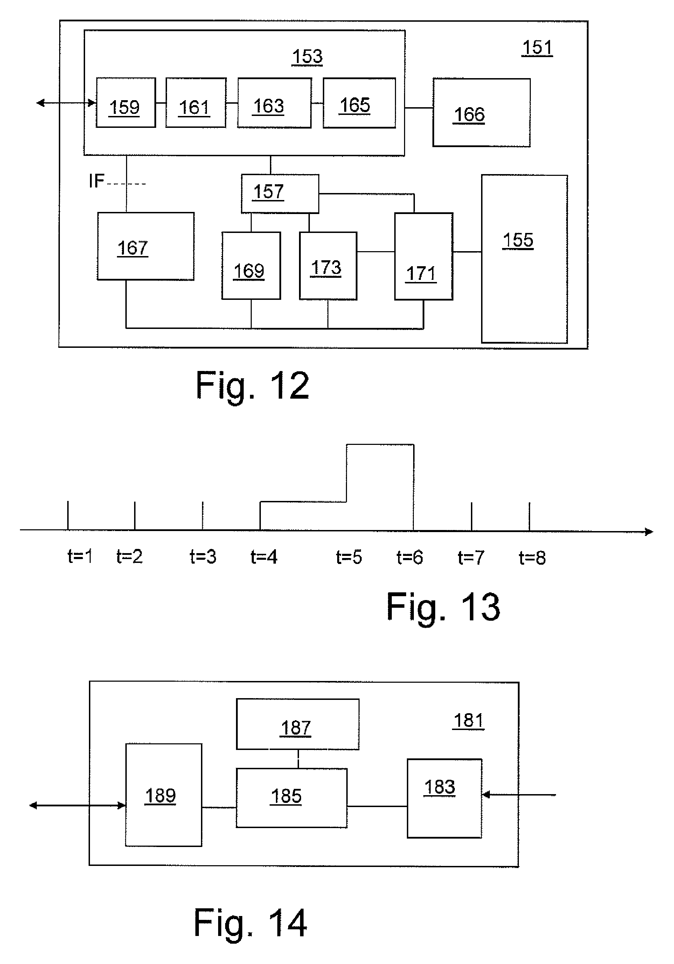

Figure 12 shows an electronic shelf label 151 according to a further aspect of the invention. As is common in the art, the label comprises control unit 153, a dot matrix display 155 and a power source 157 giving power to the control unit 153 and at least one display driver (see below). The control unit 153 comprises a communication interface 159 which is adapted to communicate, preferably wirelessly with a central unit in the electronic shelf label system. A wireless communication using for example IR or radio is preferred. The central unit is actually connected, wirelessly or by cable, to at least one transceiver that is adapted to receive and transmit data wirelessly to and from a plurality of price labels. The communication interface 159 according to the invention is adapted to receive updated information from the central unit and also positioning information about where in the dot matrix display 155 this information should be shown. The updated information is usually a new price for the product related to this specific price label but it could also be other kinds of product information that should be updated.

The control unit 153 further comprises a processing means 161 connected to the communication interface 159. This processing means 161 is adapted to process the received information and relate this to the image displayed on the dot matrix display 155. This image is also stored in a storing means 163 connected to the processing means 161. The processing means 161 is adapted to store the received updated information in the correct position of the image in the storing means 163. A first display driver 165 may be included in the control means 153, and may be used to drive a second display 166, if present.

According to the invention, the control unit 153 has an interface IF to an microprocessor 167 for controlling the IR receiver and IR transmitter. The microprocessor is preferably powered from the power source 157. The microprocessor 167 may be part of the label, or it may be an external component. The microprocessor 167 is connected to a memory 169 and also controls a display driver 171 for driving the dot matrix display 155 and a DC/DC converter 173, effectively a voltage pump, for upconverting the voltage provided by the power source 157 to a sufficiently high voltage to update the display. Also, the control unit 153 and the microprocessor 167 can share one memory instead of controlling separate memories 163, 169.

According to the invention the control unit 153 is able to send a signal to the microprocessor 167 to wake it up when this is needed. When in active mode, the microprocessor 167 controls the communication channel, for example for receiving update data from the system. The control unit 153 is used for polling, that is, at regular intervals checks if information intended for this particular label has been received. This involves checking the address field of the information frames received to determine if there is a match with the address of the label. If so, the internal control unit 153 provides a signal to the microprocessor 167 to wake it up so that it can control the reception of information.

The interface IF between the microprocessor and the internal control unit in this embodiment is a serial data bus with a data clock and some additional control signals, such as the enable signal that is used to wake up the microprocessor. The power to the microprocessor 167 could be part of the interface to enable a complete shut-down of the microprocessor 167. Alternatively, the microprocessor 167 can be connected directly to the power source 157, if it has a sleep mode with low current consumption.

In this way, sufficient processor capacity is available when needed, for example, for information updates. At the same time, since the processor 167 is only active and consuming power when it is really needed, the excess power consumption is minimized.

The power consumption according to this invention is illustrated in Figure 13. As is common in the art, the internal control unit 153 is in sleep mode for most of the time but wakes up at regular intervals to poll the connection to see if a command has been received in the label. These polls require energy, shown in Figure 13 as peaks of energy consumption at times t=1, t=2 and t=3. If a relevant command has been received, the control unit wakes up, resulting in an increased energy consumption for a period of time, starting at t=4, longer than just a peak. If the control unit 153 determines that the task to be performed is so complex that the microprocessor 167 should be involved, it sends a wake-up signal to the microprocessor 167. This results in the even higher energy consumption starting at time t=5. At time t=6 the processor and the internal control unit return to sleep mode and the power consumption drops to zero. The polling continues at times t=7, t=8 and so on. In some cases, the internal control unit 153 will still be active after the microprocessor 167 goes back to sleep mode. In these cases the power consumption will be reduced at time t=6 but not to zero.

Fig. 14 is a schematic view of a central unit 181 adapted to communicate wirelessly, for example via IR or radio, with price labels according to the invention. The central unit 181 is connected to for example a cash register and data bases comprising information that can be updated in the price labels. Normally the central unit is placed in a computer that could also comprise for example the cash register in a store. Price changes and other updated information is received in a receiving means 183 in the central unit 181 from for example a price data base. The communication interface 189 is adapted to send the updated information to the price label having the address given by the processing means 185. The processing means 185 in the central unit is further adapted to store the new, updated image in the storing means 187 such that the images in the storing means 187 always are updated and correspond to the images shown on the price labels.

In this aspect, the invention involves:
An electronic shelf label 151 arranged to be wirelessly connected to an electronic labelling system, said label comprising a wireless communication interface 159 adapted to receive information to be shown on a display 155, an internal control means 153 controlling the communication interface 159, the control means 153 being arranged to determine each time an information frame is received, whether or not the information frame is intended for the shelf label 151, said shelf label being **characterized in that** the control means 153 comprises an interface IF for communicating with a processing means 167, which can assume a sleep mode in which no power is consumed, or an active mode in which the processing means 167 controls the reception of information from the system to the label, the control means 153 being arranged to transmit a wakeup signal to the processing means 167 if it determines that the processing means 167 should assume the active mode.

This may be, for example, when an information frame intended for the label 151 is received.

Preferably, the internal control means 153 is also arranged to assume a sleep mode most of the time, poll the communication link 159 at certain time intervals and activate itself in case a message intended for the label has been received.

In a preferred embodiment the display 155 is bistable. The microprocessor 167 is preferably arranged to control updates of the display 155 by controlling a display driver 171.

The microprocessor 167 preferably controls a DC/DC converter 173 arranged to convert the voltage supplied by a power source 157 to a sufficiently high voltage to update the display.

Prior art labels generally comprise a holder for a paper strip for providing extra information, such as a bar code, related to the product. Also, most products have bar codes on the packages. The bar code on the paper strip, or on the product itself, is used to identify the product, and in so called self-scan solutions, which are becoming more and more popular in retail stores. In this case, the customer has a handheld computer including a bar code reader and registers each item that is placed in the shopping basket by reading the bar code electronically. The bar code reader typically comprises a display for displaying to the customer information such as the name and price of the last selected product as well as the sum for all products selected. It is also possible to regret a purchase, that is, to deduct the price of a item from the sum. At checkout the customer presents the handheld computer to the cashier, possibly together with a loyalty card, and the cashier receives the payment.

In the prior art, three main types of handheld device are available:
One type of handheld device is in effect a small computer, comprising information about each product, its price and so on. A second type is a small computer not holding product information but being connectable to a central data base through a wireless LAN (W-LAN) connection. Both these types of handheld device are rather complex and expensive solutions, even if each customer only borrows the handheld device while he/she is in the shop.

A third, simpler type of handheld device is a simple ID tag collector that only registers the bar codes. The product information is stored in a computer at the counter and is retrieved when the customer is to pay. This solution makes it impossible for the customer to see information about the selected products, total price etc.

Further, it is sometimes difficult to read the bar code, for example if the surface on which it is fastened is not flat. The bar code may be impossible to read even after several attempts.

When the paper strip has to be updated, it must be changed manually, which is time-consuming.

According to an aspect of the present invention the information normally provided on the paper strip is instead provided in one or more of the registers of the electronic shelf label. The handheld device can then be used to read out from this register information about the price and store it in memory.

The electronic shelf label could be equipped with an RFID tag and the handheld device could be equipped with means for requesting the RFID tag from the electronic shelf label.

Alternatively the label could be arranged to transmit its own identity information, or information related to the product, upon request.

In this case, the handheld device comprises a transceiver 56, 59 arranged to transmit a command to the label concerned, causing the label to transmit information to the handheld device in a format readable for the handheld device. This will usually include information about the identity of an item. Other information may be included as well, or instead, such as the price of an item and information about the type of product. The handheld device also comprises a memory unit 58 arranged to store at least the sum of all purchases made by the client, and the control unit 55 of the handheld device is arranged to add for each new item registered by the handheld device the price of the item to the total sum. A list of items selected and their price is preferably included.

The handheld device can also comprise a button 53, 53' (Fig. 4, Fig. 5) that can be pressed to indicate that the item is added to the shopping basket and the price should be added to the sum and a button to indicate that the item is taken out of the shopping basket and the price should be deducted from the sum. The control unit 55 is arranged to add or subtract the price accordingly.

The label comprises a transmitter arranged to transmit such information to the handheld device on a format readable by the handheld device. The control unit 33 of the label controls the reading of information from the relevant register 37 or registers of the label and the transmission of such information to the handheld device.

The transmission of the command from the handheld device, and the information from the label to the handheld device is preferably carried out by means of an infrared (IR) connection. This enables sufficient precision when selecting which label to communicate with.

According to this aspect of the invention, the information normally provided by a bar code on a paper strip or on the product can be provided by the electronic shelf label itself and read by means of a handheld device. This simplifies the updating of this information and ensures that the information is always correct.

In this aspect the invention involves:
An electronic shelf label comprising a control unit 33 and at least one memory unit 37 holding information about a product associated with said label, said label comprising receiving means 31 for receiving from a handheld device a request for information about the product associated with the electronic shelf label, said control unit 33 being arranged to process said request and select information stored in said at least one memory unit 37 and transmitter means 31 for transmitting said information to the handheld device in response to such request.

The invention also involves a handheld device for use in an electronic shelf label system comprising transceiver means (56, 59) for communicating with at least one electronic shelf label, **characterized in that** it comprises transmitter means 56 for requesting information about the product associated with the electronic shelf label, in particular price information, receiver means 59 for receiving said information from the electronic shelf label and memory means 58 for storing said information.

The handheld device as above preferably further comprises calculating means 55 for adding at least part of said information related to a price of the product to a total sum to be stored in the memory means 58.

In this aspect the invention also involves a method for use in an electronic shelf label system comprising the following steps:
- transmitting from a handheld device to an electronic shelf label a request for information related to the product associated with said label,
- receiving said request in the label
- processing said request in the label to verify that the requested information should be provided to the handheld device
- processing said request in the label to determine the pieces of information that should be transmitted to the handheld device
- transmitting the requested information to the handheld device.

The information related to said product preferably includes price information and/or a description of the product

The method above may also comprise storing the information, or part of the information in a memory in the handheld device. It may also involve adding price data comprised in the requested information to previously received price data to provide a total sum indicating the cost for several products.

Preferably, the method above also comprises displaying at least part of the requested information on a display of the handheld device.

When dot matrix displays are used it is often desirable to present an image that is a combination of information that changes very rarely, such as information related to the type of product, and information that changes more often, such as price information. In the system there is a need to combine these images and create a final image that shall be presented on the display.

Usually this is done by defining a background image comprising the static or semi-static information and a front image comprising the information that changes more often. These two images are then combined by image processing, typically involving the editing of a bitmap file, which is time consuming and requires high processor capacity.

In this way the whole image must be stored in the electronic label system, which, if the number of labels is high requires a lot of memory. Also, traditionally, when part of the information, for example the price, is to be updated, the whole image must be transmitted again.

WO 03/073261 discloses an electronic shelf label having a dot matrix display. In this document the amount of data that has to be transmitted for an update is reduced by dividing the display into parts and transmitting again only the part in which an update has been made.

According to another aspect of the present invention, therefore, an electronic shelf label system using labels having dot matrix displays, further comprising a central unit having storage means holding at least one template adapted to the display unit of at least one electronic shelf label, and at least one file having the format of a general mark-up language and conforming to the specifications of the template, said file comprising information to be displayed on at least one electronic label in the system, regarding a product associated with the at least one electronic label.

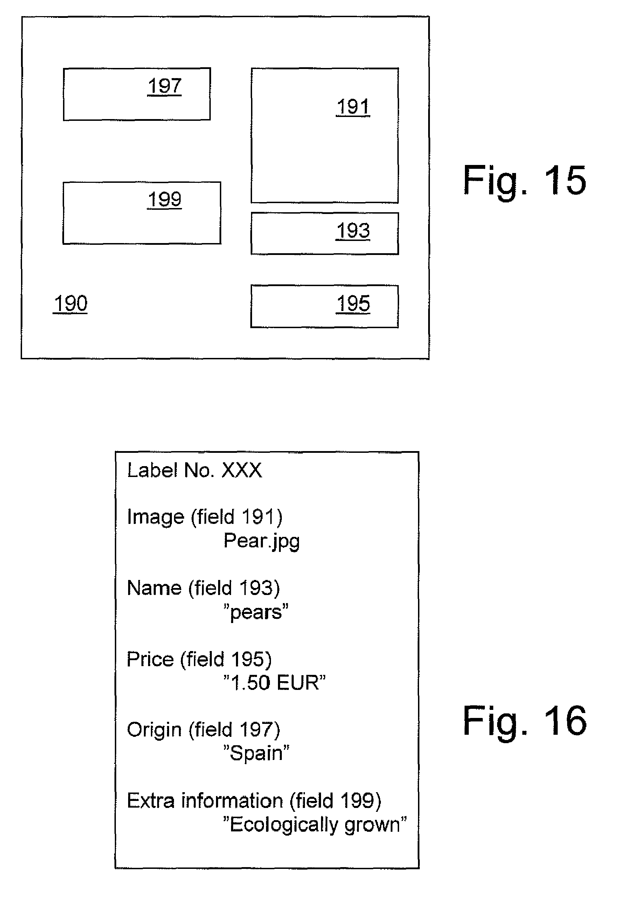

Figure 15 discloses a general layout of an electronic shelf label 190 used in the invention, having a dot matrix display. It should be noted that this Figure is intended only as an example. The electronic shelf label 190 comprises an image field 191 for displaying an image of the product, a second field 193 for displaying the name of the product, and a third field 195 for displaying the price of the product. A fourth 197 and a fifth 199 field may be used for displaying additional information, for example country of origin, and that the product conforms with environmentally friendly standards or if the product comprises ingredients that may provoke allergy.

Figure 16 displays a simplified mark-up language file for the label shown in Figure 15. The file is identified by the label number, in this case XXX. Under "Image" the file specifies that the image found in the file "pear.jpg" should be displayed in the image field 191. The name of the product displayed in the second field 193 should be "pears". The price should be specified in the third field as 1.50 Euro. The country of origin should be specified in the fourth field 197 as "Spain" and the extra information field 199 should contain the information that the pears have been grown ecologically. Of course, text files can be referenced as well as image files. The values for all fields are preferably stored in a database together with the product identity and the label identity.

The corresponding method for creating an image to be displayed on at least one electronic shelf label comprises the following steps:
- defining or selecting a template for the label;
- specifying, in a first file, in a general mark-up language, the pieces of information to be displayed in the image, conforming to the specifications of the template
- generating from the first file a bitmap file of the total image,
- define the part of the image that needs to be transmitted again. This involves getting transmission parameters for the part of the image and extracting the part of the image from the total image
- transmitting the extracted part of the bitmap file to the at least one electronic shelf label.

The pieces of information can be information included directly in the file or references to other files holding the information.

In this way, the information to be displayed on each label is stored in the system as one file defining the different parts of the image. The file format is that of a general mark-up language, such as HTML, or XML. A template is used to define the layout of information on the display. This template is normally common to a number of labels, or even all labels used in the system. In addition any predefined images, such as pictures of the merchandise, that are to be displayed on the labels are stored in the system. Each picture only has to be stored in one place, and the HTML file associated with a particular label references the appropriate picture that is to be displayed on this label. Hence, the method and system according to the invention greatly reduce the memory space needed.

The conversion of a HTML file to a bit map may be done using existing software, for example HTML2BMP converter.

The method and system according to the invention also simplify the handling and update of information displayed on the electronic labels. Only the part that is to be updated has to be changed. If an image is to be changed, simply the reference to the image file has to be changed.

By defining in the template a position and a span for each field only the fields that have been updated have to be transmitted again.

For example, a HTML, or XML, template, defining an image field and three fields for price, discount price and unit price, respectively, and the positions of all fields, may be as follows:

```
    <! DOCTYPE HTML PUBLIC "-//W3C//DTD HTML 3.2//EN">
    <!Layout Script "DMPL_Normal">
    <Data Categorization File "dmpl_conf.xml">
    <HTML>
    <HEAD>
    </HEAD>
    <BODY LANG="en-us">
    <span style="position:absolute; top:0px; left:0px">
          <IMG SRC=##image1" ALIGN=MIDDLE WIDTH=100 HEIGHT=100 BORDER=0
    </span>
    <span style="position:absolute; top:120px; lef 60px;">##price</span>
    <span style="position:absolute; top:160px; lef 60px;">##discount_price</span>
    <span style="position:absolute; top:180px; lef 60px;">##unit_price</span>
    </BODY>
    </HTML>
```

The corresponding transmission parameter file can look as follows:

```
    <?xml version="1.0" encoding="UTF-8"?>
    <DataCategory>
          <Data>
                <Type>Image</Type>
                <ID>image</ID>
                <Start-X-Position>0</Start-X-Position>
                <Start-Y-Position>0</Start-Y-Position>
                <Width>100</Width>
                <Height>100</Height>
          </Data>
                 <Data>
                <Type>Text </Type>
                <ID>price</ID>
                <Start-X-Position>60</Start-X-Position>
                <Start-Y-Position> 120</Start-Y-Position>
                <Fontsize>1</Fontsize >
          </Data>
                          <Data>
                <Type>Text </Type>
                <ID>unit price</ID>
                <Start-X-Position>60</Start-X-Position>
                <Start-Y-Position> 160</Start-Y-Position>
                <Fontsize>1</Fontsize >
          </Data>
                          <Data>
                <Type>Text </Type>
                <ID>discount price</ID>
                <Start-X-Position>60</Start-X-Position>
                <Start-Y-Position> 180</Start-Y-Position>
                <Fontsize>1</Fontsize >
          </Data>
```

As described in WO 03/073261, instead of transmitting the whole, or part of the bitmap, the part of the image that is to be changed could instead be sent as coded text, for example ASCII code, to the price label where the generation of the image in this case is performed in the processing means 11.

In this aspect the invention involves a central unit for use in an electronic shelf label system, said central unit comprising a processing unit 2 and comprising or being connectable to a memory unit 3 arranged to hold control information to govern display information to be displayed on at least one electronic label 11, said label comprising at least one field 191, 193, 195, 197, 199 for a predefined type of information, **characterized in that** the memory unit is arranged to store said information in the form of text files in a mark-up language format, each text file referencing a template file determining the layout of the information on the label, and in that the processing unit 2 is arranged to convert said text files to a display file having a format that is readable by the electronic label and transmitting the display file to the label.

Preferably, the processing unit 2 is arranged to convert said text files to bit map format.

The mark-up language is preferably HTML or XML.

The text files can also reference other files, such as image files, to be included in the display file after conversion.

The text files preferably comprises border information determining the span of each field 191-199, said border information being used by the processing means 2 to determine at least one part of the display file that has to be transmitted in order to update the label when the text file has been updated.

According to a further aspect of the invention, a handheld device is provided for use with an electronic labelling system for communicating with at least one label used in the electronic labelling system, said handheld device comprising transmission means 56 for transmitting a command to at least one shelf label 11 in the electronic labelling system memory means 58, control means 55 to control the function of the handheld device, and at least one button 53, 53' for providing user input, **characterized in that** it comprises a receiver 59 controllable by the control means 55 and arranged to receive information from a central unit 1 in the electronic labelling system. The transmission means 56 may be arranged to transmit an authorization code to the label 11 in order to verify the authorization to transmit said command, and the receiver 59 is arranged to receive information about a new authorization code to replace an old authorization code, and that the control means 55 is arranged to store the new authorization code in the memory means 58. The handheld device may comprise unique identity information stored in the memory means 58 and transmission means 59 for communicating said unique identity information to the system. The handheld device may be arranged for wireless communication such as IR communication or RF communication. The handheld device may be **characterized in that** it comprises essentially the same type of control circuit and/or receiver as the electronic labels used in the electronic labelling system. The handheld device may be arranged to transmit to the label a command to display a certain piece of information comprised in a register in the label. The handheld device may be arranged to transmit to the label a command to change information comprised in a register in the label.

According to a further aspect of the invention, a handheld device including a display 57 for displaying information to a holder of the handheld display is provided.

According to a further aspect of the invention, an electronic shelf label system is provided comprising at least a first base station 4 communicating with a central unit 1, and with a number of electronic shelf labels 11 through wireless connections for determining at least a first piece of information to be displayed on the labels 11, said system also comprising handheld devices for communicating with the shelf labels 11, said electronic shelf label system comprising a central unit 1 and communication means 4, 5 connected to the central unit 1, **characterized in that** the communication means 4,5 is arranged to transmit a message to at least one handheld device. The electronic shelf label system may be **characterized in that** it is arranged to receive in the central unit 1 information transmitted from said at least one handheld device and process said information in the central unit 1. The central unit 1 may bearranged to transmit a new authorization code to the handheld device, which code can be stored in the handheld device and transmitted from the handheld devices to at least one shelf label 11 for authentication of the handheld device. The communication means 4, 5 may be arranged to receive from the at least one handheld device information regarding a unique identity of the handheld device and communicate this information to the central unit 1, to enable selection of information to communicate to the handheld device in dependence of said unique identity. The handheld device and the electronic shelf labelling system may be arranged for wireless communication such as IR communication or RF communication. The handheld device may comprise essentially the same type of control circuit and/or receiver as the shelf labels used in the electronic labelling system. The electronic shelf label system may comprise a master authorization code that can be enabled in the system to give access to all information comprised on the electronic shelf labels.

According to a furhter aspect of the invention, an electronic shelf label 11 is provided comprising a plurality of registers 37 for holding a plurality of different pieces of information, and a control unit 33 controlling the display of information from the registers 37 in dependence of commands input from a handheld device, said electronic shelf label being **characterized in that** the label comprises at least one stored authorization code associated with each register 37 and that the control unit 33 is arranged to, when a command to display the information of a specific register is received in the control unit 33, to compare a received authorization code with a command to the stored authorization code associated with the specific register 37 and display the information contained in the register if the received authorization code matches the stored authorization code. The electronic shelf label may comprise a stored master authorization code, wherein the control unit 33 is arranged to display the information contained in the register 37 if the received authorization code matches the stored master authorization code.

According to a furhter aspect of the invention, a method for use in an electronic shelf label system is provided, said system comprising a central unit 1 and communication means 4, 5 for communication with at least one electronic label 11 in the system, and at least one handheld device arranged to communicate with said label 11, characterized by the steps of - transmitting from the central unit a first message to the at least one handheld device; - receiving said first message in the handheld device. The method may be characterized by the steps of: -transmitting from the central unit to at least said first handheld device information about a new authorization code to be used by the handheld device when communicating with at least one electronic shelf label,- storing said new authorization code in a memory means in the handheld device for inclusion in commands transmitted to said at least one electronic label 11, - transmitting from the central unit 1 to at least one electronic shelf label 11 used in said electronic shelf label system information regarding the new authorization code;- storing said new authorization code in a memory means 58 in the electronic shelf label for comparison with an authorization code comprised in a command received from a handheld device. The handheld device and the electronic shelf label system may communicate by wireless communication such as IR or RF communication. The handheld device and the at least one electronic shelf label may comprise essentially the same type of control unit and/or receiver.

It is an object of the present invention to provide a more versatile handheld device. This object is achieved according to the invention, by a handheld device for use with an electronic labelling system for communicating with at least one label used in the electronic labelling system, said handheld device comprising transmission means for transmitting a command to at least one shelf label in the electronic labelling system, memory means and control means to control the function of the handheld device, and at least one button for providing user input, **characterized in that** it comprises a receiver, controllable by the control means and arranged to receive information from a central unit in the ESL system.

This provides a more flexible handheld device than the ones available in the prior art. Among other things, new commands can be transmitted from the central unit to the handheld device to enable new functions. This is particularly useful in a simplified form of handheld device comprising only one button, since this button can be used for different commands at different times, depending on information received from the central unit.

In a preferred embodiment the transmission means is arranged to transmit an authorization code to the label in order to verify the authorization to transmit said command and the receiver is arranged to receive information about a new authorization code to replace an old authorization code, and that the control means is arranged to store the new authorization code in the memory means.

In this way the authorization code can be set individually as desired for each shop. The shop can specify different types of function for the handheld devices and determine which handheld devices to use for which type of function. For example, some handheld devices can be used by personnel, some by ordinary customers and some by members. The authorization code can be used to determine what a particular handheld device is authorized to do.

The handheld device preferably comprises unique identity information and transmission means for communicating said unique identity information to the system.

In this way, the system can adapt the information transmitted, for example, the new command or new authorization code, to the function specified for the handheld device. Preferably the handheld device and the central unit and transceivers of the system communicate using the same method and protocol.

The handheld device and the ESL system are arranged for wireless communication such as IR communication or RF communication.

Preferably, the handheld device comprises essentially the same type of control circuit as the shelf labels used in the ESL system. This simplifies the design of the handheld device and communication between the handheld device and the labels.

In one embodiment the handheld device is arranged to transmit to the label a command to display a certain piece of information comprised in a register in the label.

This enables a particularly simple handheld device, which can have essentially only one button, and is therefore limited to transmitting one command. Since such a handheld device will be relatively inexpensive, the cost of providing handheld devices to customers will be reduced. This function can be implemented in any type of handheld device, not only those arranged to receive information from a central unit in the ESL system.

The handheld device may be arranged to transmit to the label a command to change information comprised in a register in the label.

The handheld device preferably includes a display for displaying information to a holder of the handheld display. The display can be used for commercial messages, or for information directed to the user of the handheld device.

The object is also achieved by an electronic shelf label system comprising at least a first base station communicating with a central unit, and with a number of electronic shelf labels through wireless connections for determining at least a first piece of information to be displayed on the labels, said system also comprising handheld devices for communicating with the shelf labels, said electronic shelf label system comprising a central unit and communication means connected to the central unit, **characterized in that** the communication means is arranged to transmit a message to at least one handheld device.

Preferably, the central unit is arranged to transmit a new authorization code to the handheld device, which code can be stored in the handheld device and transmitted from the handheld device to at least one shelf label for authentication of the handheld device.

The communication means of the electronic shelf label system are preferably arranged to receive information from the at least one handheld device, especially information regarding a unique identity of the handheld device and communicate this information to the central unit, to enable selection of information to communicate to the handheld device in dependence of said unique identity. Preferably this is done when the system already knows the identity of the user of the handheld device by reading a loyalty customer card or similar in order to be able to associate the identity of the handheld device with a user and to enable user-specific offers or other messages to be displayed on a display of the handheld device.

Preferably, the handheld device and the ESL system are arranged for wireless communication such as IR communication or RF communication.

Preferably, the handheld device and the electronic labels comprise essentially the same type of receiver and/or control unit.

Preferably, the electronic shelf label system comprises a master authorization code that can be enabled in the system to give access to all information comprised on the electronic shelf labels.

The object is also achieved by a method of programming at least a first handheld device for use in an electronic shelf label system, said system comprising a central unit and communication means for communication with at least one electronic label in the system, and at least one handheld device arranged to communicate with said at least one electronic label, said method including the following steps: transmitting from the central unit a first message to the at least one handheld device; receiving said first message in the handheld device.

The method preferably comprises the following steps:transmitting to at least said first handheld device information about a new authorization code to be used by the handheld device when communicating with at least one electronic shelf label, storing said new authorization code in a memory means in the handheld device for inclusion in commands transmitted to said at least one electronic label,transmitting from the central unit to at least one electronic shelf label used in said electronic shelf label system information regarding the new authorization code, and storing said new authorization code in a memory means in the electronic shelf label for comparison with an authorization code comprised in a command received from a handheld device.

The handheld device and the ESL system communicate by wireless communication such as IR communication or RF communication.

The object is also achieved by an electronic shelf label comprising a plurality of registers for holding a plurality of different pieces of information, and a control unit controlling the display of information from the registers in dependence of commands input from a handheld device, **characterized in that** the label comprises at least one stored authorization code associated with each register and that the control unit is arranged to, when a command to display the information of a specific register is received in the control unit, to compare a authorization code comprised in a command from the handheld device, to the stored authorization code associated with the specific register and display the information contained in the register if the received authorization code matches the stored authorization code.

The electronic shelf label preferably also comprises a stored master authorization code, wherein the control unit is arranged to display the information contained in the register if the received authorization code matches the stored master authorization code.

## Claims

1. An electronic shelf label comprising
a control unit (33) and at least one memory unit (37) holding information about a product associated with said label,
said label comprising receiving means (31) for receiving from a handheld device a request for information about the product associated with the electronic shelf label,
said control unit being arranged to process said request and select information stored in said at least one memory unit, and
transmitter means for transmitting said information to the handheld device in response to such request.

2. An electronic shelf label according to claim 1, wherein transmission of said information to the handheld device is carried out by means of wireless transmission.

3. An electronic shelf label according to claim 1 or 2, wherein transmission of said information to the handheld device is carried out by means of infrared (IR) communication.

4. An electronic shelf label according to any one of the claims 1-3, comprising an RFID tag.

5. A handheld device for use in an electronic shelf label system comprising
transceiver means (56, 59) for communicating with at least one electronic shelf label,
**characterized in that**
transmitter means (56) is provided for requesting information about the product associated with the electronic shelf label, in particular price information,
receiver means (59) is provided for receiving said information from the electronic shelf label and memory means (58) for storing said information.

6. A handheld device according to claim 5, further comprising calculating means (55) for adding at least part of said information related to a price of the product to a total sum to be stored in the memory means.

7. A method for use in an electronic shelf label system comprising the following steps:
transmitting from a handheld device to an electronic shelf label a request for information related to the product associated with said label,
receiving said request in the label,
processing said request in the label to verify that the requested information should be provided to the handheld device,
processing said request in the label to determine the pieces of information that should be transmitted to the handheld device, and
transmitting the requested information to the handheld device.

8. A method according to claim 7, wherein the information related to said product preferably includes price information and/or a description of the product.

9. A method according to claim 7, comprising the step of storing the information, or part of the information in a memory in the handheld device.

10. A method according to claim 7, including the step of adding price data comprised in the requested information to previously received price data to provide a total sum indicating the cost for several products.

11. A method according to claim 7, including the step of displaying at least part of the requested information on a display of the handheld device.
